Europäisches Patentamt

**European Patent Office**

**Office européen des brevets**

(11) Veröffentlichungsnummer: **0 226 649**
**B1**

(12) **EUROPÄISCHE PATENTSCHRIFT**

(45) Veröffentlichungstag der Patentschrift:
09.08.89

(51) Int. Cl.⁴: **H04N 9/78**

(21) Anmeldenummer: **85116236.2**

(22) Anmeldetag: **19.12.85**

(54) **Farbartregelschaltung eines digitalen Fernsehempfängers.**

(43) Veröffentlichungstag der Anmeldung:
01.07.87 Patentblatt 87/27

(45) Bekanntmachung des Hinweises auf die Patenterteilung:
09.08.89 Patentblatt 89/32

(84) Benannte Vertragsstaaten:
**DE FR GB IT NL**

(56) Entgegenhaltungen:
ELECTRONICS INTERNATIONAL, Band 56, Nr. 18,
September 1983, Seiten 131-133, New York, US; R.
DEUBERT "Digital prowess increases in color
television sets"

(73) Patentinhaber: **Deutsche ITT Industries GmbH,**
**Hans-Bunte-Strasse 19 Postfach 840,**
**D-7800 Freiburg(DE)**

(72) Erfinder: **Flamm, Peter-Michael, Dipl.-Ing.,**
**Stefan-Meier-Strasse 167, D-7800 Freiburg i.Br.(DE)**
Erfinder: **Freyberger, Laurin Clemens, Dipl.-Ing.,**
**Schönenbergstrasse 1, D-7833 Endingen a.K.(DE)**

**Beschreibung**

Die Erfindung betrifft eine Farbartregelschaltung eines digitalen Fernsehempfängers entsprechend dem jeweiligen Oberbegriff der Ansprüche 1 und 4. Eine derartige Farbartregelschaltung ist im INTERMETALL-Datenbuch "Digit 2000 VLSI Digital TV System", Freiburg/Br., Juni 1985, Seiten 162 bis 174 beschrieben, die den NTSC-Kammfilter-Video-Prozessor CVPU 2210 erläutern. Insbesonderer Fig. 10-2 auf Seite 165 mit der zugehörigen Beschreibung in Abschnitt 10.1.4 auf Seite 167 und 10.1.6 auf Seite 168 enthalten die Farbartregelschaltung nach den erwähnten Oberbegriffen.

Nach dem NTSC- bzw. PAL-Fernseh-Standard läßt sich der Farbton eines Bildpunktes anschaulich als winkelcodiertes Signal gegenüber einem Senderbezugssystem angeben. Die verschiedenen Phasenwinkel von 0 bis 360° entsprechen zugeordneten Farbtönen, wobei die Nullbezugsphase die Nullphase des einen der beiden Standard-Farbdifferenzsignale, nämlich des (B-Y)-Farbdifferenzsignals, ist. Das Senderbezugssystem ist der unmodulierte Farbträger, der während der Bildzeile unterdrückt ist, während des Zeilenrücklaufs aber kurze Zeit als Farbsynchronsignal (= Burst-Signal) ausgesendet wird, wobei dessen Phase, bezogen auf das (B-Y)-Farbdifferenze-Signal, - 180° beim NTSC-Fernseh-Standard und +/- 135° beim PAL-Fernseh-Standard ist.

Das Empfängerbezugssystem ist bei der vorbeschriebenen Farbartregelschaltung der Systemtakt, der die vierfache Frequenz des unmodulierten Farbträgers hat und mit ihm frequenz- und phasenmäßig fest verkoppelt ist; dabei entsprechend vier aufeinanderfolgende Systemtaktimpulse, beginnend mit der Nullphase des (B-Y)-Farbdifferenzsignals, den Phasenwinkeln von 0°, 90°, 180° und 270° des unmodulierten Farbträgers. Dieser ist, als Teil des Farb-Bild-Austast-Synchron-Signalgemisches (=FBAS-Signal) bereits beschrieben, der Farbartregelschaltung zugeführt, nachdem mittels des Chrominanzfilters Chrominanz- und Luminanzanteil vom FBAS-Signal getrennt worden sind.

Die Nullbezugsphase des Empfängerbezugssystems ist entsprechend dem NTSC- oder PAL-Fernseh-Standard die Nullphase des (B-Y)-Farbdifferenz-Signals während des Empfangs des Farbsynchronsignals. In diesem Fall ist das (R-Y)-Farbdifferenz-Signal gleich null und der Phasenvergleich in der Phasen-Regelschleife sehr einfach.

Die Funktion dieser Farbartregelschaltung ist davon abhängig, daß die Farbträgerfrequenz und die Systemtaktfrequenz, die gleich der vierfachen Farbträgerfrequenz ist, miteinander frequenz- und phasenmäßig fest verkoppelt sind. Dies wird von einer Phasen-Regelschleife be wirkt, die den Systemtakt auf Frequenz und Phase des unmodulierten Farbträgers einrasten läßt.

Bei der Weiterentwicklung und Verbesserung dieser integrierten Farbartregelschaltung haben die Erfinder erkannt, daß die Einwirkung der Phasen-Regelschleife auf Frequenz und Phase des Systemtakts von Nachteil ist. Zum Beispiel erfordert die Phasen-Regelschleife einen bezüglich der Frequenz spannungsgesteuerten Oszillator für den Systemtakt, dessen Phasenabweichung gegen die Bezugsphase während einer Bildzeile höchstens 3 ° betragen darf. Dies entspricht einer zulässigen Frequenzabweichung des Systemtakts von nur 0,03 Promille von seinem Sollwert, wenn die Phasendifferenz anfangs der Bildzeile gleich null ist. Andernfalls ist die zulässige Frequenzabweichung noch geringer. Die erforderliche Frequenzkonstanz und Regelgenauigkeit ist also sehr groß, weshalb abstimmbare Quarzoszillatoren für die Systemtakterzeugung verwendet werden.

Ferner sind die sich aus dem Phasenvergleich ergebenden Abstimmdaten dem spannungsgesteuerten Oszillator, der als abstimmbarer Quarzoszillator, z.B. innerhalb einer eigenen monolithischen integrierten Schaltung aufgebaut ist, zuzuführen, was bei beiden integrierten Schaltungen zusätzliche Anschlüsse und Verbindungsleitungen erfordert.

Ein weiterer Nachteil ergibt sich beim Einsatz derartiger Farbartregelschaltungen in Fernsehempfängern mit mehreren Empfangseinheiten, welche die Informationen mehrerer Signalquellen oder Fernsehkanäle gleichzeitig auf dem Bildschirm darstellen. Für jede einzelne Empfangseinheit ist dabei ein eigenes Taktsystem erforderlich, dessen Frequenz mit der Frequenz des jeweiligen Farbsynchronsignals zu synchronisieren ist. Bei der geringen Frequenzabweichung der verschiedenen empfangenen Farbsynchronsignale ist eine gegenseitige Beeinflussung der zugehörigen spannungsgesteuerten Oszillatoren kaum zu verhindern, was zu störenden Interferenzen auf dem Bildschirm führt. Die Beeinflussung ist umso stärker, je größer der Ziehbereich der abstimmbaren Quarzoszillatoren ist, weil deren Frequenzkonstanz damit abnimmt.

Der in den Ansprüchen gekennzeichneten Erfindung liegt daher die Aufgabe zugrunde, die vorbeschriebene Farbartregelschaltung so weiterzubilden, daß der Systemtakt nicht auf die vierfache Frequenz des ursprünglich empfangenen Farbträgers eingerastet zu sein braucht, so daß er an andere systembezogene Signale, z.B. ein Festfrequenzsignal, angeschlossen werden kann und daß die Phasen-Regelschleife eine rein digitale ist.

Der Grundgedanke der Erfindung besteht darin, die richtige Einstellung der Frequenz und der Phase zwischen dem das Empfängerbezugsytem bildenden Systemtakt und dem Farbsynchronsignal nicht wie bisher dadurch zu erreichen, daß auf analoge Weise der Systemtakt mittels eines spannungsgesteuerten Oszillators auf die vierfache Frequenz und die vierfache Phase des Farbsynchronsignals gezogen und damit fest verkoppelt wird, sondern daß die Frequenz und die Phase des Systemtakts als Empfängerbezugssystem unverändert bleiben und die zur Verkopplung erforderlichen Maßnahmen am empfangenen Farbsynchron- und Farbartsignal vorgenommen werden. Die Phase des digitalisierten Farbsynchronsignals wird daher auf rein digitale Weise mittels einer Phasen-Regelschleife solange gegen die Nullphase des Empfängerbezugssystems gedreht, bis sie entsprechend dem NTSC- bzw. dem PAL-Fernseh-Standard bei -180°

bzw. bei +/- 135° liegt, gleichzeitig ist die Frequenzgleichheit zwischen dem gedrehten Farbsynchronsignal und dem Systemtakt hergestellt. Der erforderliche Korrekturwinkel wird dann auch auf das Farbartsignal übertragen. Bei großen Frequenzunterschieden zwischen dem ursprünglich empfangenen Farbsynchronsignal und dem Systemtakt ist die Korrektur der Farbartsignale während der Bild-Zeile noch zu interpolieren.

Ein besonderer Vorteil der Erfindung besteht darin, daß an die vorbeschriebene Farbartregelschaltung eine oder mehrere Farbartregelschaltungen nach der Erfindung angegliedert werden können, um einen Fernsehempfänger für Mehrfachbildwiedergabe herzustellen, der nur einen einzigen Systemtakt für alle Empfangssysteme enthält.

Ein weiterer wichtiger Vorteil besteht darin, daß der Systemtakt insbesonderer an Signale, die mit der Zeilenfrequenz bzw. mit einem von deren Vielfachen verkoppelt sind, angeschlossen werden kann. Das bringt Vorteile beim Videorecorderbetrieb und bei Signalverarbeitungsverfahren zur Bildverbesserung, wie sie z.B. beim sogenannten Flimmerfreien-Fernsehen verwendet werden.

Schließlich ist die erforderliche Interpolation der Farbartkorrektur während der Bildzeile auch bei großen Frequenzunterschieden zwischen dem ursprünglich empfangenen Farbsynchronsignal und dem Systemtakt durch die Erfindung vorteilhaft gelöst.

Die Erfindung wird nun anhand der Figuren der Zeichnung näher erläutert.

Fig. 1 zeigt in Form eines Blockschaltbildes schematisch ein Ausführungsbeispiel der Erfindung und
Fig. 2 zeigt das Blockschaltbild einer weiteren Ausführungsform der Erfindung.

Da mittels der in den Figuren dargestellten Schaltungen Digitalsignale verarbeitet werden, sind deren Teilschaltungen der zeichnerischen Klarheit wegen lediglich durch an sich Einzelleitungen symbolisierende Linien miteinander verknüpft, die jedoch bei der Erfindung als Busse zu verstehen sind, mit denen mehrstellige Digitalsignale insbesondere parallel weitergegeben werden.

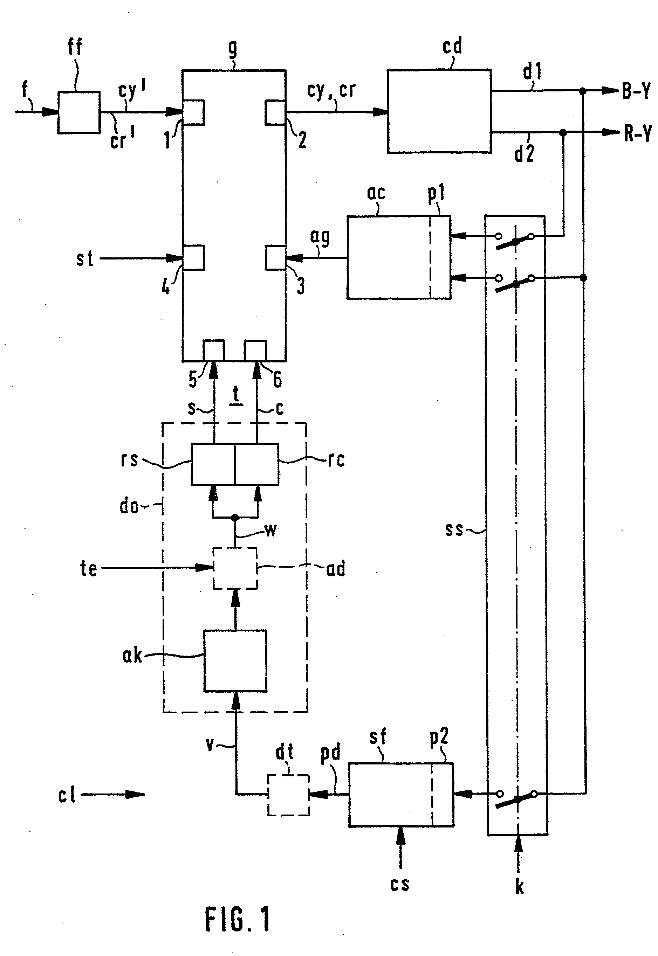

Im Blockschaltbild der Fig. 1 ist das auf bekannte Weise aus dem gesendeten und empfangenen Fernsehsignal gewon nene digitale FBAS-Signal f dem Chrominanzfilter ff zugeführt, dessen Ausgang mit dem Chroma-Eingang 1 der Rechenstufe g verbunden ist. In dieser werden die Verarbeitungsoperationen ausgeführt, die für die Burstamplituden-Regelung, die Farbsättigungs-Einstellung und die Farbton-Einstellung erforderlich sind. Die Rechenstufe g enthält daher mindestens einen Multiplizierer und eine Addier- und Subtrahierstufe. Der Chroma-Ausgang 2 der Rechenstufe g liefert als Signalgemisch das Farbsynchronsignal cy und das Farbartsignal cr an den Eingang des Farbdemodulators cd, der die zwei Standard-Farbdifferenzsignale, das (B-Y)- und das (R-Y)-Farbdifferenzsignal d1, d2 erzeugt. Diese sind weiteren, jedoch nicht gezeigten Schaltungsteilen zugeführt, speisen andererseits aber auch über die Arbeitskontakte einer der Schaltungsebenen des elektronischen Mehrfach-Schalters ss jeweils einen Eingang der Burstamplituden-Regelschaltung ac, welcher der erste Pufferspeicher p1 vorgeschaltet ist, der die beiden Eingangssignale speichert, wenn die vom Burst-Tastimpuls k nur während seiner Dauer geschlossenen Arbeitskontakte geöffnet sind. Das Ausgangssignal, der Burstamplituden-Regelwert ag, ist dem Burstregeleingang 3 der Rechenstufe g zugeführt.

Das Farbsättigungs-Einstellsignal st, mit dem die Farbsättigung über eine Regelschaltung oder über eine manuelle Eingabe verändert werden kann, ist dem Sättigungseingang 4 der Rechenstufe g zugeführt.

Nach einem Teilmerkmal der Erfindung dient der Farbdemo dulator cd als Phasenvergleicher, der aus dem Farbsynchronsignals cy das (B-Y)-Farbdifferenzsignal d1 als Phasendifferenzsignal erzeugt und über Arbeitskontakte des vom Burst-Tastimpuls k gesteuerten elektronischen Mehrfach-Schalters ss dem Eingang des Schleifenfilters sf zuführt. Dieses enthält eingangsseitig den zweiten Pufferspeicher p2, der während der Öffnungzeit der Arbeitskontakte des elektronischen Mehrfach-Schalters ss den Datenwert des (B-Y)-Farbdifferenzsignals d1 speichert. Ferner ist dem Schleifenfilter sf der Schleifenfiltertakt cs zugeführt, dessen Frequenz niedriger als die Frequenz des Systemtakts cl ist, z.B. 1/16 von dessen Frequenz betragen kann. Da das Schleifenfilter sf die Zeilenfrequenz sperrt, niedrigere, für die Phasenregelung aber wichtige Frequenzen durchläßt, ergibt sich durch die niedrigere Frequenz des Schleifenfiltertakts cs ein weniger Halbleiterfläche benötigendes Digitalfilter, als wenn es mit dem Systemtakt cl betrieben würde.

Das (B-Y)-Farbdifferenzsignal d1 ist somit während der Zeit, in der das Farbsynchronsignal cy am Farbdemodulator cd anliegt, ein Maß für die Phasendifferenz zwischen dem Farbsynchronsignal cy und dem Systemtakt cl, allerdings tritt die Phasendifferenz als Sinus-Wert des Phasendifferenzwinkels auf. Das Ausgangssignal des Schleifenfilters sf ist das gefilterte Phasendifferenzsignal pd, das, vorzugsweise über den Differenzierer dt, nach einem weiteren Teilmerkmal der Erfindung den Akkumulator ak des digitalen Oszillators do speist. Das Ausgangssignal des Differenzierers dt ist das Winkelgeschwindigkeitssignal v. Für die Phasen-Regelschleife ergibt der Differenzierer dt ein proportionales Regelverhalten; wenn dagegen das gefilterte Phasendifferenzsignal pd direkt dem Akkumulator ak zugeführt ist, ergibt sich praktisch integrales Regelverhalten.

Da das gefilterte Phasendifferenzsignal pd Sinus-Charakter hat, hat das Winkelgeschwindigkeitssignal v nach dem Differenzierer dt Kosinus-Charakter. Ein allenfalls bis auf das Vorzeichen gleiches Signal mit Kosinus-Charater wäre erhältlich, wenn das Schleifenfilter sf an das (R-Y)-Farbdifferenzsignal d2 angeschlossen wäre, weil dieses dem Kosinus-Wert des Phasendifferenzwinkels entspricht.

Der digitale Oszillator do erzeugt in Verbindung mit dem Farbtoneinsteller t den Farbton-Einstellwinkel w, dessen Wert je nach Phasendifferenz konstant zu- oder abnimmt. Der digitale Oszillator do, dessen Ausgangssignale, das Sinus- und das Kosinus-Signal s, c jeweils den Sinus- bzw. Kosinus-Eingang 5, 6 der Rechenstufe g speisen, erzeugt auch die etwa konstante "Umlaufgeschwindigkeit" des Farbton-Einstellwinkels w. Dieser ist damit der eingangs genannte Korrekturwinkel für das ursprünglich empfangene Farbsynchronsignal cy' und das ursprünglich empfangene Farbartsignal cr'.

Das erläuterte Regelverhalten tritt auch noch bei einem gegenüber dem eingangs erwähnten, erhöhten Schwankungsbereich der Frequenz des Systemtakts cl auf, so daß die se z. B. mindestens um +/- 0,25‰ der vierfachen Farbträgerfrequenz schwanken kann.

Der Ausgang des Akkumulators ak ist an den ersten Eingang des Addierers ad angeschlossen, dessen zweitem Eingang das Farbton-Einstellsignal te zugeführt ist. Dieses Signal ermöglicht die Korrektur von Farbtonverfälschungen, die durch Laufzeiteffekte auf dem Übertragungswege auftreten und insbesondere beim NTSC-Farbfernseh-Standard stören. Der Farbton-Einstellwinkel w ist das Summensignal des Addierers ad, und dieses speist den ersten und den zweiten Festwertspeicher rs, rc, die zu dem jeweiligen Farbton-Einstellwinkel w das entsprechende Sinus- bzw. Kosinus-Signal s, c erzeugen.

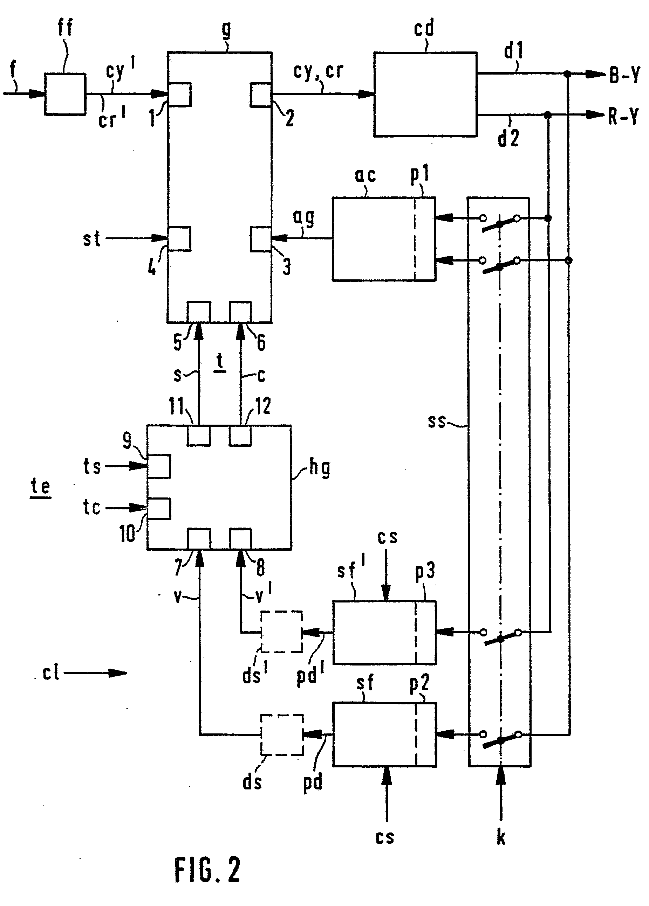

Die momentane Phase des Systemtakts cl geht nur beim Digitalisieren des analogen FBAS-Signals in die Signalverarbeitung ein, während die anderen Teilschaltungen vom Systemtakt cl oder dem Schleifenfiltertakt cs lediglich synchronisiert werden. Aus diesem Grund ist in Fig. 1 und in Fig. 2 der Systemtakt cl nur einmal allgemein als Pfeil zugeführt gezeichnet.

Das Blockschaltbild nach Fig. 2 zeigt das digitale FBAS-Signal f, das durch das Chrominanzfilter ff gefiltert den Chroma-Eingang 1 der Rechenstufe g speist. Deren Ausgang, der Chroma-Ausgang 2, enthält als Signalgemisch das Farbsynchronsignal cy und das Farbartsignal cr und ist mit dem Eingang des Farbdemodulators cd verbunden.

Die Ausgangssignale des Farbdemodulators cd sind die beiden Standard-Farbdifferenzsignale, das (B-Y)- und das (R-Y)-Farbdifferenzsignal d1, d2, die weiteren hier nicht näher gezeigten Schaltungen zur Farbverarbeitung zugeführt sind. Zudem speist das (B-Y)-Farbdifferenzsignal d1 über die Arbeitskontakte einer der Schaltebenen des elektronischen Mehrfach-Schalters ss einen Eingang der Burst-Amplituden-Regelschaltung ac sowie den Eingang des Schleifenfilters sf. Ferner speist das (R-Y)-Farbdifferenzsignal d2 über je einen Arbeitskontakt einer der Schaltebenen des elektronischen Mehrfach-Schalters ss den anderen Eingang der Burst-Amplituden-Regelschaltung ac und den Eingang des weiteren Schleifenfilters sf', das in Frequenzgang und Verstärkung identisch mit dem Schleifenfilter sf ist, und wie dieses mit dem Schleifenfiltertakt cs getaktet ist.

Der Burstamplituden-Regelschaltung ac ist der erste Pufferspeicher p1 vorgeschaltet, der die Eingangsdaten festhält, wenn die Arbeitskontakte der entsprechenden Schaltebene des elektronischen Mehrfach-Schalters ss geöffnet sind. Das Ausgangssignal, der Burstamplituden-Regelwert ag, ist dem Burst-Regeleingang 3 der Rechenstufe g zugeführt. Der Eingang des Schleifenfilters sf enthält den zweiten Pufferspeicher p2 und der Eingang des weiteren Schleifenfilters sf' den dritten Pufferspeicher p3, welche die jeweiligen Eingangsdaten speichern, wenn die Arbeitskontakte der entsprechenden Schaltebenen des vom Burst-Tastimpuls k gesteuerten elektronischen Mehrfach-Schalters ss geöffnet sind.

Das Phasendifferenzsignal pd des Schleifenfilters sf speist die erste Differenzierstufe ds, deren Ausgangssignal, das Winkelgeschwindigkeitssignal v, dem ersten Eingang 7 der Hilfsrechenstufe hg zugeführt ist. Das Ausgangssignal des weiteren Schleifenfilters sf', das weitere Phasendifferenzsignal pd', speist die zweite Differenzierstufe ds', deren Ausgangssignal, das weitere Winkelgeschwindigkeitssignal v', dem zweiten Eingang 8 der Hilfsrechenstufe hg zugeführt ist.

Die beiden Ausgangssignale der Schleifenfilter sf, sf' können auch jeweils direkt der Hilfsrechenstufe hg zugeführt werden. Da die vom Farbdemodulator cd an die Hilfsrechenstufe gelangenden Signale Sinus- bzw. Kosinus-Charakter haben, hat die Vertauschung der Signale an einer Schnittstelle allenfalls bis auf das Vorzeichen die gleiche Wirkung wie deren Differenzierung.

Die Ausnutzung der Ausgangssignale des Farbdemodulators cd als Phasendifferenz-Werte in Fig. 1 und Fig. 2 ist dadurch möglich, daß die Amplitude des Farbsynchronsignals, die Burst-Amplitude, unabhängig von der Größe des empfangenen FBAS-Signals mittels der Burst-Amplituden-Regelschaltung ac auf konstante Amplitude geregelt wird und somit die Ausgangssignale des Farbdemodulators cd als Sinus- und Kosinus-Wert des Phasendifferenzwinkels zu verwenden sind.

Die Hilfsrechenstufe hg ist nur dann erforderlich, wenn das Farbton-Einstellsignal te zur Korrektur der Farbton fehler vorgesehen ist. Im anderen Falle kann das Winkelgeschwindigkeitssignal v bzw. das Phasendifferenzsignal pd direkt als Sinus-Signal s dem Sinus-Eingang 5 der Rechenstufe g und das weitere Winkelgeschwindigkeitssignal v' bzw. das weitere Phasendifferenzsignal pd' als Kosinus-Signal c dem Kosinus-Eingang 6 der Rechenstufe g zugeführt werden.

Bei der Zuführung des Farbton-Einstellsignals te in Fig. 2 ist rechnerisch eine Transformation erforderlich, die der Drehung eines in einem ebenen rechtwinkeligen Koordinatensystems gegebenen Zeigers um einen vorgebbaren Winkel entspricht und in der Hilfsrechenstufe hg durchgeführt ist. Zu diesem Zweck ist das Farbton-Einstellsignal te dem dritten Eingang 9 der Hilfsrechenstufe hg als Sinus-Komponente ts bzw. als Kosinus-Komponente tc dem vierten Eingang 10 zugeführt.

Die Sinus-Komponente ts bzw. die Kosinus-Komponente tc können auch innerhalb der Hilfsrechenstufe hg mittels eines dritten und eines vierten Festwertspeichers, der die Sinus- bzw. die Kosinus-Werte eines Quadranten enthält erzeugt werden.

Für die Rechenoperation enthält die Hilfsrechenstufe hg mindestens einen Multiplizierer, einen Addierer und Subtrahierer. Der Sinus-Ausgang 11 der Hilfsrechenstufe hg liefert das Sinus-Signal s, das den Sinus-Eingang 5 der Rechenstufe g speist. Der Kosinus-Ausgang 12 der Hilfsrechenstufe hg liefert das Kosinus-Signal c, das den Kosinus-Eingang 6 der Rechenstufe g speist. Wie bei Fig. 1 bilden bei Fig. 2 der Sinus-Eingang 5 und der Kosinus-Eingang 6 der Rechenstufe g gleichzeitig den Eingang des Farbtoneinstellers t.

Innerhalb der Hilfsrechenstufe hg werden folgende Rechenoperationen durchgeführt:

$$s = v' \cdot tc - v \cdot ts$$
$$c = v \cdot tc + v' \cdot ts$$

Da die Bandbreite im Chrominanzbereich kleiner als im Luminanzbereich ist und die Burstamplituden-Regelung die Farbsättigungs- und Farbtoneinstellung mit jeweils noch geringerer Bandbreite erfolgt, ist in Fig. 1 und 2 eine entsprechende Funktionstrennung in der Rechenschaltung g sinnvoll; z.B. wird meist das Farbsättigungs-Einstellsignal st mit dem Burstamplituden-Regelwert ag multipliziert. Diese Multiplikation kann seriell erfolgen, weil sich die beiden Faktoren nur sehr langsam ändern. Das Ergebnis dieser Multiplikation, das erste Zwischenprodukt, wird mit dem Sinus-Signal s und mit dem Kosinus-Signal c multipliziert und ergibt das zweite bzw. das dritte Zwischenprodukt. Diese werden einem derart aufgebauten Multiplizierer zugeführt, daß in vier Systemtaktperioden mindestens zwei aufeinanderfolgende, am Chroma-Eingang 1 eingegebene Signale mit jeweils dem zweiten bzw. dem dritten Zwischenprodukt multipliziert werden.

Als schneller Multiplizierer kann er in Pipeline-Technik aufgebaut sein. Das am Chroma-Ausgang 2 abgegebene Ergebnis dieser Multiplikation mit anschließender Summen- oder Differenzbildung ist dabei um die durch die Pipeline-Technik bedingte Verzögerung zusätzlich verzögert.

Zum Verständnis der Funktion der Rechenstufe g ist der Rechenvorgang funktionell an vier nacheinander abgetasteten Momentanwerten C1', S1', C2', S2' gezeigt, welches die Kosinus-bzw. Sinus-Anteile des des ursprünglich empfangenen Farbsynchronsignals cy' oder des ursprünglich empfangenen Farbartsignals cr', somit die senderseitig codierten Standard-Farbdifferenzsignale in folgender Reihenfolge sind:

C1': das (B-Y)'-Farbdifferenzsignal,
S1': das (R-Y)'-Farbdifferenzsignal,
C2': das -(B-Y)'-Farbdifferenzsignal und
S2': das -(R-Y)'-Farbdifferenzsignal.

Dabei ist C2' = -C1' und S2' = -S1' entsprechend den vier abgetasteten Winkelquadranten einer vollständigen Farbträgerperiode. Die Rechenstufe g berechnet innerhalb eines Rechenzyklus, der aus vier Taktperioden besteht und damit der vollständigen Farbträgerperiode entpricht, zusätzlich zur Verzögerung, die durch die Anwendung der sogenannten Pipelining-Technik auf die Rechenstufe g entsteht, die um den Korrekturwinkel gedrehten Sinus- und Kosinus-Anteile S, C des Chrominanzsignals cr und des Farbsynchronsignals cy und gibt sie alternierend am Chroma-Ausgang 2 ab, dabei ist:

$$S = S1' \cdot ag \cdot st \cdot c - C1 \cdot ag \cdot st \cdot s \text{ und}$$
$$C' = C1 \cdot ag \cdot st \cdot c + S1 \cdot ag \cdot st \cdot s.$$

Der Farbdemodulator cd, welcher der Rechenstufe g nachgeschaltet ist, ist im wesentlichen ein Demultiplexer-Schaltkreis, der die alternierend abgegebenen Sinus- und Cosinus-Anteile S, C trennt und als die (B-Y)- und (R-Y)-Farbdifferenzsignale d1, d2 abgibt.

## Patentansprüche

1. Farbartregelschaltung eines digitalen Fernsehempfängers
- mit einem Systemtakt (cl), dessen Frequenz etwa beim Vierfachen der Farbträgerfrequenz liegt, und der der Abtasttakt für die Digitalisierung des analogen FBAS-Signals ist,
- mit einer Rechenstufe (g), die Multiplizierer, Addierer und Subtrahierer enthält und deren Chroma-Eingang (1) mit dem Ausgang eines Chrominanzfilters (ff) verbunden ist,
- mit einem Farbdemodulator (cd), der zwei Standard-Farbdifferenzsignale, das (B-Y)- und das (R-Y)-Farbdifferenzsignal (d1, d2) erzeugt und am Chroma-Ausgang (2) der Rechenstufe (g) angeschlossen ist,
- mit einer Phasen-Regelschleife, welche den Systemtakt (cl) und das Farbsynchronsignal (cy) in Frequenz und Phase fest miteinander verkoppelt,
- mit einem Phasenvergleicher, dem mindestens ein Standard-Farbdifferenzsignal zugeführt ist,
- mit einer Burstamplituden-Regelschaltung (ac), die eingangsseitig mit den beiden (B-Y)- und (R-Y)-Farbdifferenzsignalen (d1, d2) gespeist ist und ausgangsseitig mit dem Burst-Regeleingang (3) der Rechenstufe (g) verbunden ist, deren Sättigungseingang (4) ein Farbsättigungs-Einstellsignal (st) zugeführt ist,
- mit einem ersten und einem zweiten Festwertspeicher (rs, rc), der die Sinus- bzw. die Kosinus-Werte des ersten Quadranten enthält und deren jeweiliger Datenausgang mit dem Sinus- bzw. dem Kosinus-Eingang (5, 6) der Rechenstufe (g) verbunden ist und einen Farbtoneinsteller (t) bildet, und
- mit einem Schleifenfilter (sf), das an den Ausgang des Phasenvergleichers angeschlossen ist,
gekennzeichnet durch folgende Merkmale:
- die Phasen-Regelschleife regelt die Frequenz des ursprünglich empfangenen Farbsynchronsignals (cy') auf ein Viertel der Frequenz des Systemtakts (cl) und die Phase des ursprünglich empfangenen Farbsynchronsignals (cy') derart, daß das aus dem Farbsynchronsignal (cy) erhaltene (B-Y)-Farbdifferenzsignal beim NTSC-Fernsehstandard um -180° und beim PAL-Fernsehstandard um +/- 135° gegen die Nullbezugsphase des vom Systemtakt (cl) gebildeten Empfängerbezugssystems gedreht ist,
- die Stellgröße dieser Regelung ist der Korrekturwinkel des Farbsynchronsignals (cy) gegenüber dem ursprünglich empfangenen Farbsynchronsignal (cy'), der auch auf das ursprünglich empfangene Farbartsignal (cr') zur Erzeugung des Farbartsignals (cr) einwirkt,
- als Phasenvergleicher dient der Farbdemodulator (cd), dessen (B-Y)-Farbdifferenzsignal (d1) als Phasendifferenz-Signal das Schleifenfilter (sf) speist, und
- dessen Ausgang liegt am Eingang eines Akkumulators (ak), dessen Ausgang mit dem jeweiligen Eingang des ersten und des zweiten Festwertspeichers (rs, rc) verbunden ist.

2. Farbartregelschaltung nach Anspruch 1, dadurch gekennzeichnet, daß zwischen dem Akkumulator (ak) verbunden ist und den beiden Festwertspeichern (rs, rc) ein Addierer (ad) eingefügt ist, dessen erster Eingang mit dem Ausgang des Akkumulators (ak) und dessen zweitem Eingang ein Farbton-Einstellsignal (te) zugeführt wird.

3. Farbartregelschaltung nach Anspruch 1 oder 2, dadurch gekennzeichnet, daß zwischen dem Ausgang des Schleifenfilters (sf) und dem Eingang des Akkumulators (ak) ein Differenzierer (dt) eingefügt ist.

4. Farbartregelschaltung eines digitalen Fernsehempfängers
- mit einem Systemtakt (cl), dessen Frequenz etwa beim vierfachen der Farbträgerfrequenz liegt und der der Abtasttakt für die Digitalisierung des analogen FBAS-Signals ist,
- mit einer Rechenstufe (g), die Multiplizierer, Addierer und Subtrahierer enthält und deren Chroma-Eingang (1) mit dem Ausgang eines Chrominanzfilters (ff) verbunden ist,
- mit einem Farbdemodulator (cd), der zwei Standard-Farbdifferenzsignale, das (B-Y)- und das (R-Y)-Farbdifferenzsignal (d1, d2), erzeugt und am Chroma-Ausgang (2) der Rechenstufe (g) angeschlossen ist,
- mit einer Phasen-Regelschleife, welche den Systemtakt (cl) und das Farbsynchronsignal (cy) in Frequenz und Phase fest miteinander verkoppelt,
- mit einem Phasenvergleicher, dem mindestens ein Standard- Farbdifferenzsignal zugeführt ist,
- mit einer Burstamplituden-Regelschaltung (ac), die eingangsseitig mit den beiden (B-Y)- und (R-Y)-Farbdifferenzsignalen (d1, d2) gespeist ist und ausgangsseitig mit dem Burst-Regeleingang (3) der Rechenstufe (g) verbunden ist,
- mit einem Farbsättigungs-Einstellsignal (st), das den Sättigungseingang (4) der Rechenstufe (g) speist,
- mit einem Sinus- und Kosinus-Signal (s, c), das den Sinus- bzw. den Kosinus-Eingang (5, 6) der Rechenstufe (g) speist, und
- mit einem Schleifenfilter (sf), das an den Ausgang des Phasenvergleichers angeschlossen ist,
gekennzeichnet durch folgende Merkmale:
- die Phasenregelschleife regelt die Frequenz des ursprünglich empfangenen Farbsynchronsignals (cy') auf ein Viertel der Frequenz des Systemtakts (cl) und die Phase des ursprünglich empfangenen Farbsynchronsignals (cy') derart, daß das aus dem Farbsynchronsignal (cy) erhaltene (B-Y)-Farbdifferenzsignal beim NTSC-Fernseh-Standard um - 180° und beim PAL-Fernseh-Standard um +/- 135° gegen die Nullbezugsphase des vom Systemtakt (cl) gebildeten Empfängerbezugssystems gedreht ist,
- die Stellgröße dieser Regelung ist der Korrekturwinkel des Farbsynchronsignals (cy) gegenüber dem ursprünglich empfangenen Farbsynchronsignal (cy'), der auch auf das ursprünglich empfangene Farbartsignal (cr') zur Erzeugung das Farbartsignal (cr) einwirkt,
- als Phasenvergleicher dient der Farbdemodulator (cd), dessen (B-Y)- bzw. (R-Y)-Farbdifferenzsignal (d1, d2) als Phasendifferenz-Signale das Schleifenfilter (sf) bzw. ein dazu identisches weiteres Schleifenfilter (sf') speisen,
- der Ausgang des Schleifenfilters (sf) bzw. des weiteren Schleifenfilters (sf') ist an den ersten bzw. an den zweiten Eingang (7, 8) einer Hilfsrechenstufe (hg) angeschlossen, deren drittem bzw. viertem Eingang (9, 10) die Sinus- bzw. Kosinus-Komponente (ts, tc) des Farbton-Einstellsignals (te) zugeführt ist,
- die Hilfsrechenstufe (hg) enthält mindestens einen Multiplizierer, Addierer und Subtrahierer,
- der erste bzw. der zweite Ausgang (11, 12) der Hilfsrechenstufe (hg) speist den Sinus- bzw. den Kosinus-Eingang (5, 6) der Rechenstufe (g).

5. Farbartregelschaltung nach Anspruch 4, dadurch gekennzeichnet, daß die Hilfsrechenstufe (hg) einen dritten und einen vierten Festwertspeicher mit den Sinus- bzw. Kosinus-Werten des ersten Quadranten enthält.

6. Farbartregelschaltung nach Anspruch 4 oder 5, dadurch gekennzeichnet, daß zwischen dem Schleifenfilter (sf) und dem ersten Eingang (7) der Hilfsrechenstufe (hg) eine erste Differenzierstufe (ds) und zwischen dem weiteren Schleifenfilter (sf') und dem zweiten Eingang (8) der Hilfsrechenstufe (hg) eine zweite Differenzierstufe (ds') eingefügt sind.

7. Farbartregelschaltung nach mindestens einem der Ansprüche 1 bis 6, dadurch gekennzeichnet, daß die Rechenstufe (g) zwischen dem Chroma-Eingang (1) und dem Chroma-Ausgang (2) einen derart aufgebauten Multiplizierer enthält, daß in vier Systemtaktperioden mindestens zwei aufeinanderfolgende, am Chroma-Eingang (1) eingegebene Signale jeweils mit einem der in der Rechenstufe (g) erzeugten Zwischenprodukte multipliziert werden.

8. Farbartregelschaltung nach Anspruch 5, dadurch gekennzeichnet, daß der Hilfsrechenstufe (hg) das Farbton-Einstellsignal (te) als Winkelbetrag zugeführt ist, dessen Sinus- bzw. Kosinus-Komponente (ts, tc) innerhalb der Hilfsrechenstufe (hg) mittels des dritten bzw. vierten Festwertspeichers erzeugt ist.

9. Farbartregelschaltung nach mindestens einem der Ansprüche 1 bis 8, dadurch gekennzeichnet, daß der Systemtakt (cl) zu einem systembezogenen Signal, insbesondere einem Signal, dessen Frequenz ein Zeilenfrequenz-Vielfaches ist, synchron ist.

10. Farbartregelschaltung nach mindestens einem der Ansprüche 1 bis 9, dadurch gekennzeichnet daß die Farbartregelschaltung Teil eines digitalen Fernsehempfängers mit gleichzeitiger Mehrfachbildwiedergabe von verschiedenen Signalquellen, insbesondere verschiedenen Fernsehkanälen, auf dem Bildschirm ist und der Systemtakt (cl) entweder nur mit dem Farbsynchronsignal einer einzigen Signalquelle bzw. eines einzigen Fernsehkanals oder nur mit einem einzigen systemgezogenen anderen Signal, insbesondere einem Signal, dessen Frequenz ein Zeilenfrequenz-Vielfaches oder konstant ist, synchron ist.

## Claims

1. Chroma control circuit for a digital television receiver
- with a system clock (cl) whose frequency is approximately four times the chrominance-subcarrier frequency, and which is the sampling clock for the digitization of the analog composite color signal,
- with a calculating stage (g) containing multipliers, adders, and subtracters and having its chroma input (1) connected to the output of a chrominance filter (ff);
- with a chrominance demodulator (cd) which derives two standard color-difference signals, the B–Y color-difference signal (d1) and the R–Y color-difference signal (d2), and is connected to the chroma output (2) of the calculating stage (g),
- with a phase-locked loop which locks the system clock (cl) in frequency and phase to the color-burst signal (cy),
- with a phase comparator which is supplied with at least one standard color-difference signal,
- with a burst amplitude control circuit (ac) which is fed with the two B–Y and R–Y color-difference signals (d1, d2) and has its output connected to the burst control input (3) of the calculating stage (g), whose saturation input (4) is supplied with a color saturation adjustment signal (st),
- with a first read-only memory (rs) and a second readonly memory (rc) containing, respectively, the sine values and the cosine values of the first quadrant and having their data outputs connected, respectively, to the sine input (5) and the cosine input (6) of the calculating stage (g), said outputs forming a hue adjuster (t), and
- with a loop filter (sf) connected to the output of the phase comparator,
characterized by the following features:
- The phase-locked loop adjusts the frequency of the originally received color-burst signal (cy') to one quarter of the frequency of the system clock (cl) and controls the phase of the originally, received color-burst signal (cy') in such way that the phase of the B–Y color-difference signal derived from the color-burst signal (cy) is shifted with respect to the zero reference phase of the receiver reference system formed by the system clock (cl) by –180° in the case of the NTSC television standard and by +/– 135° in the case of the PAL television standard;
- the manipulated variable of this control action is the correction angle of the color-burst signal (cy) with respect to the originally received color-burst signal (cy'), said angle also acting on the originally received chrominance signal (cr') to produce the chrominance signal (cr);
- the function of the phase comparator is performed by the chrominance demodulator (cd), whose B–Y color-difference signal (d1) is fed as a phase-difference signal to the loop filter (sf), and

- the output of the loop filter (sf) is coupled to the input of an accumulator (ak) having its output connected to the inputs of the first and second read-only memories (rs, rc).

2. A chroma control circuit as claimed in claim 1, characterized in that an adder (ad) whose first input is connected to the output of the accumulator (ak) and whose second input is fed with a hue adjustment signal (te) is inserted between the accumulator (ak) and the two readonly memories (rs, rc).

3. A chroma control circuit as claimed in claim 1 or 2, characterized in that a differentiator (dt) is inserted between the output of the loop filter (sf) and the input of the accumulator (sk).

4. Chroma control circuit for a digital television receiver
- with a system clock (cl) whose frequency is approximately four times the chrominance-subcarrier frequency, and which is the sampling clock for the digitization of the analog composite color signal,
- with a calculating stage (g) containing multipliers, adders, and subtracters and having its chroma input (1) connected to the output of a chrominance filter (ff):
- with a chrominance demodulator (cd) which derives two standard color-difference signals, the B–Y color-difference signal (d1) and the R–Y color-difference signal (d2), and is connected to the chroma output (2) of the calculating stage (g),
- with a phase-locked loop which locks the system clock (cl) in frequency and phase to the color-burst signal (cy),
- with a phase comparator which is supplied with at least one standard color-difference signal,
- with a burst amplitude control circuit (ac) which is fed with the two B–Y and R–Y color-difference signals (d1, d2) and has its output connected to the burst control input (3) of the calculating stage (g),
- with a color saturation adjustment signal (st), which is fed to the saturation input (4) of the calculating stage (g),
- with a sine-wave signal (s) and a cosine-wave signal (c) which are fed, respectively, to the sine input (5) and the cosine input (6) of the calculating stage (g), and
- with a loop filter (sf) connected to the output of the phase comparator,
characterized by the following features:
- The phase-locked loop adjusts the frequency of the originally received color-burst signal (cy') to one quarter of the frequency of the system clock (cl) and controls the phase of the originally received color-burst signal (cy') in such a way that the phase of the B–Y color-difference signal derived from the color-burst signal (cy) is shifted with respect to the zero reference phase of the receiver reference system formed by tho system clock (cl) by –180° in the case of the NTSC television standard and by +/– 135° in the case of the PAL television standard;
- the manipulated variable of this control action is the correction angle of the color-burst signal (cy) with respect to the originally received color-burst signal (cy'), said angle also acting on the originally received chrominance signal (cr') to produce the chrominance signal (cr);
– the function of the phase comparator is performed by the chrominance demodulator (cd), whose B–Y and R–Y color-difference signals (d1, d2) are fed as phase-difference signals to the loop filter (sf) and to a similar additional loop filter (sf'), respectively;
– the outputs of the loop filter (sf) and the additional loop filter (sf') are connected, respectively, to the first and second inputs (7, 8) of an auxiliary calculating stage (hg) whose third and fourth inputs (9, 10) are fed, respectively, with the sine component (ts) and the cosine component (tc) of the hue adjustment signal (te);
– the auxiliary calculating stage (hg) contains at least one multiplier, one adder, and one subtracter, and
– the first and second outputs (11, 12) of the auxiliary calculating stage (hg) are coupled, respectively, to the sine input (5) and the cosine input (6) of the calculating stage (g).

5. A chroma control circuit as claimed in claim 4, characterized in that the auxiliary calculating stage (hg) contains a third read-only memory holding the sine values of the first quadrant and a fourth read-only, memory holding the cosine values of the first quadrant.

6. A chroma control circuit as claimed in claim 4 or 5, characterized in that a first differentiating stage (ds) is inserted between the loop filter (sf) and the first input (7) of the auxiliary calculating stage (hg), and a second differentiating stage (ds') between the additional loop filter (sf') and the second input (8) of the auxiliary calculating stage (hg).

7. A chroma control circuit as claimed in at least one of claims 1 to 6, characterized in that the calculating stage (g) contains between the chroma input (1) and the chroma output (2) a multiplier designed in such a way that in four system clock periods, at least two successive signals entered through the chroma input (1) are each multiplied by one of the intermediate products obtained in the calculating stage (g).

8. A chroma control circuit as claimed in claim 5, characterized in that the hue adjustment signal (te) is fed as an angular amount to the auxiliary calculating stage (hg), the sine and cosine components (ts, tc) of the hue adjustment signal (te) being derived in the auxiliary calculating stage (hg), by means of the third and fourth read-only memories, respectively.

9. A chroma control circuit ai claimed in at least one of claims 1 to 8, characterized in that the system clock (cl) is synchronous with a system-related signal, particularly a signal whose frequency is a multiple of the horizontal frequency.

10. A chroma control circuit as claimed in at least one of claims 1 to 9, characterized in that it forms part of a digital television receiver with a multipicture display facility for simultaneously displaying pictures provided by different signal sources, particularly different television channels, on the screen and that the system. clock (cl) is synchronous either only with the color-burst signal of a single signal source or a single television channel or only with a single system-related other signal, particularly a signal whose frequency is a multiple of the horizontal frequency or constant.

**Revendications**

1. Circuit de réglage de la chrominance d'un récepteur numérique de télévision comprenant:
– une horloge système (cl) dont la fréquence est environ quadruple de celle de la sous-porteuse couleur et qui est la fréquence d'échantillonnage pour la numérisation du signal FBAS analogique,
– un étage de calcul (g) contenant des multiplicateurs, des additionneurs et des soustracteurs et dont l'entrée de chroma (1) est reliée à la sortie d'un filtre de chrominance (ff),
– un démodulateur de couleur (cd) générant deux signaux de différence de couleur standard, le signal de différence de couleur (B–Y) (d1) et le signal de différence de couleur (R–Y) (d2) et qui est relié à la sortie de chroma (2) de l'étage de calcul (g),
– une boucle de mise en phase qui synchronise l'horloge du système (cl) et le signal de synchronisation de couleur (cy) en fréquence et en phase,
– un comparateur de phases qui reçoit au moins un signal standard de différence de couleur,
– un circuit de régulation de l'amplitude de salve (ac) qui est alimenté en entrée par les deux signaux de différence de couleur (B–Y) et (R–Y)(d1, d2) et qui alimente en sortie l'entrée de régulation de salve (3) de l'étage de calcul (g) dont l'entrée de saturation (4) reçoit un signal de réglage de la saturation de couleur (st),
– une première et une seconde mémoires de valeurs fixes (rs, rc) contenant les valeurs des sinus et des cosinus du premier quadrant et dont la sortie de données est reliée à l'entrée de sinus ou de cosinus (5, 6) de l'étage de calcul (g) et forme un circuit de réglage de couleur (t), et
– un filtre de boucle (sf) qui est raccordé à la sortie du comparateur de phase,
caractérisé
– en ce que la boucle de régulation de phase règle la fréquence du signal de synchronisation de couleur (cy') initialement reçu à un quart de celle de l'horloge du système (cl) et la phase du signal de synchronisation de couleur (cy') initialement reçu de telle manière que le signal de différence de couleur (B–Y) obtenu à partir du signal de synchronisation de couleur (cy) soit décalé par rapport à la phase de référence zéro du système de référence du récepteur formé par l'horloge du système (cl) de –180° dans le cas de la norme de télévision NTSC et de ± 135° dans le cas de la norme de télévision PAL,
– en ce que la grandeur réglante de cette régulation est l'angle de correction du signal de synchronisation de couleur (cy) par rapport au signal de synchronisation de couleur (cy') initialement reçu, qui agit également sur le signal de chrominance (cr') initialement reçu pour la production du signal de chrominance (cr),
– en ce que l'on utilise comme comparateur de phases le démodulateur de couleur (cd) dont le signal de différence de couleur (B–Y)(d1) alimente comme signal de déphasage le filtre de bande (sf), et
– en ce que sa sortie est relié à l'entrée d'un accumulateur (ak) dont la sortie est reliée à l'entrée de la première et de la seconde mémoire de valeurs fixes (rs, rc).

2. Circuit de réglage de chrominance selon la revendication 1, caractérisé en ce qu'est inséré, entre l'accumulateur (ak) et les deux mémoires de valeurs fixes (rs, rc), un additionneur (ad) dont la première entrée est reliée à la sortie de l'accumulateur (ak) et dont la seconde entrée reçoit un signal de régulation de couleur (te).

3. Circuit de réglage de chrominance selon la revendication 1 ou 2, caractérisé en ce qu'un différenciateur (dt) est inséré entre la sortie du filtre de boucle (sf) et l'entrée de l'accumulateur (ak).

4. Circuit de réglage de la chrominance d'un récepteur numérique de télévision comportant:
– une horloge système (cl) dont la fréquence est environ quadruple de celle de la sous-porteuse couleur et qui est la fréquence d'échantillonnage pour la numérisation du signal FBAS analogique,
– un étage de calcul (g) contenant des multiplicateurs, des additionneurs et des soustracteurs et dont l'entrée de chroma (1) est reliée à la sortie d'un filtre de chrominance (ff),
– un démodulateur de couleur (cd) générant deux signaux de différence de couleur standard, le signal de différence de couleur (B–Y)(d1) et le signal de différence de couleur (R–Y)(d–2) et qui est raccordé à la sortie de chroma (2) de l'étage de calcul (g),
– une boucle de mise en phase qui synchronise l'horloge du système (cl) et le signal de synchronisation de couleur (cy) en fréquence et en phase,
– un comparateur de phases qui reçoit au moins un signal standard de différence de couleur,
– un circuit de régulation de l'amplitude de salve (ac) qui est alimenté en entrée par les deux signaux de différence de couleur (B–Y) et (R–Y)(d1, d2) et qui alimente en sortie l'entrée de régulation de salve (3) de l'étage de calcul (g),
– un signal de réglage de la saturation de couleur (st) qui alimente l'entrée de saturation (4) de l'étage de calcul (g)
– un signal de sinus et de cosinus (s, c) qui alimente l'entrée de sinus ou de cosinus (5, 6) de l'étage de calcul (g), et
– un filtre de boucle (sf) qui est relié à la sortie du comparateur de phase,
caractérisé
– en ce que la boucle de régulation de phase règle la fréquence du signal de synchronisation de couleur (cy') initialement reçu à un quart de celle de l'horloge du système (cl) et la phase du signal de synchronisation de couleur (cy') initialement reçu de telle manière que le signal de différence de couleur (B–Y) obtenu à partir du signal de synchronisation de couleur (cy) soit décalé par rapport à la phase de référence zéro du système de référence du récepteur formé par l'horloge du système (cl) de –180° dans le cas de la norme de télévision NTSC et de ± 135° dans le cas de la norme de télévision PAL,
– en ce que la grandeur réglante de cette régulation est l'angle de correction du signal de synchronisation de couleur (cy) par rapport au signal de synchronisation de couleur (cy') initialement reçu, qui agit également sur le signal de chrominance (cr') initialement reçu pour la production du signal de chrominance (cr),
– en ce que le démodulateur de couleur (cd) est utilisé comme comparateur de phases, les signaux de différence de couleur (B–Y)(d1) et (R–Y)(d2) du démodulateur alimentant en signal de déphasage le filtre de bande (sf) et un autre filtre de bande identique (sf'),
– en ce que la sortie du filtre de boucle (sf) ou de l'autre filtre de boucle (sf') est reliée à la première et à la seconde entrées (7, 8) d'un étage de calcul auxiliaire (hg) dont la troisième et la quatrième entrées (9, 10) reçoivent la composante sinus et cosinus (ts, tc) du signal de régulation de couleur (te),
– en ce que l'étage de calcul auxiliaire (hg) contient au moins un multiplicateur, un additionneur et un soustracteur,
– en ce que la première et la seconde sorties (11, 12) de l'étage de calcul auxiliaire (hg) alimentent l'entrée de sinus et de cosinus (5, 6) de l'étage de calcul (g).

5. Circuit de réglage de chrominance selon la revendication 4, caractérisé en ce que l'étage de calcul auxiliaire (hg) contient une troisième et une quatrième mémoires de valeurs fixes avec les valeurs de sinus et de cosinus du premier quadrant.

6. Circuit de réglage de chrominance selon la revendication 4 ou 5, caractérisé en ce qu'un premier étage différenciateur (ds) est inséré entre le filtre deboucle (sf) et la première entrée (7) de l'étage de calcul auxiliaire (hg) et en ce qu'un second étage différenciateur (ds') est inséré entre l'autre filtre de boucle (sf') et la seconde entrée (8) de l'étage de calcul auxiliaire (hg).

7. Circuit de réglage de chrominance selon au moins l'une des revendications 1 à 6, caractérisé en ce que l'étage de calcul (g) contient entre l'entrée de chroma (1) et la sortie de chroma (2) un multiplicateur conçu de manière à multiplier en quatre périodes de l'horloge du système au moins deux signaux successifs appliqués à l'entrée de chroma (1) avec l'un des produits partiels générés dans l'étage de calcul (g).

8. Circuit de réglage de chrominance selon la revendication 5, caractérisé en ce que l'étage de calcul auxiliaire (hg) reçoit le signal de régulation de couleur (te) sous la forme d'une valeur angulaire dont les composantes sinus et cosinus (ts, tc) sont produites au sein de l'étage de calcul auxiliaire (hg) à l'aide de la troisième et de la quatrième mémoires de valeurs fixes.

9. Circuit de réglage de chrominance selon au moins l'une des revendications 1 à 8, caractérisé en ce que l'horloge du système (cl) est synchrone avec un signal référencé au système, notamment avec un signal dont la fréquence est un multiple de la fréquence de ligne.

10. Circuit de réglage de chrominance selon au moins l'une des revendications 1 à 9, caractérisé en ce que le circuit de réglage de chrominance fait partie d'un récepteur numérique de télévision avec reproduction simultanée à l'écran d'images multiples provenant de différentes sources de signaux, en particulier différents canaux de télévision, et en ce que l'horloge du système (cl) n'est synchronisée qu'avec soit le signal de synchronisation de couleur d'une seule source de signaux ou d'un seul canal de télévision, soit un seul autre signal référencé au système, en particulier un signal dont la fréquence est un multiple de la fréquence de ligne ou est constante.

FIG. 1

FIG. 2